# EUROPÄISCHE PATENTANMELDUNG

(11) **EP 2 565 479 A1**
(43) Veröffentlichungstag der Anmeldung: **06.03.2013**
(21) Anmeldenummer: 11179265.1
(22) Anmeldetag: 30.08.2011
(51) Int. Cl.: F16D 3/32

(54) **Zentrieranordnung an einem Doppelkreuzgelenk**

(71) Anmelder: GKN Driveline Bruneck AG, 39031 Bruneck (IT)
(72) Erfinder: Unterweger, Stefan, 39030 Pfalzen (IT); Mair Am Tinkhof, Günther, 39030 Mühlwald (IT)
(74) Vertreter: Müller, Thomas Michael

(57) **Zusammenfassung**

Zentrieranordnung an einem Doppelkreuzgelenk umfassend
eine erste Außengabel 3 mit zwei ersten Außengabelarmen 4, die durch eine erste Brücke 5 miteinander verbunden sind, wobei die erste Brücke 5 einen auf einer ersten Längsachse L₁ zentrierten Lagerzapfen 6 trägt,
eine zweite Außengabel 7 mit zwei zweiten Außengabelarmen 8, die durch eine zweite Brücke 9 miteinander verbunden sind, wobei die zweite Brücke 9 eine auf einer zweiten Längsachse L₂ zentrierten Kalotte 10 mit einer zumindest teilweise hohlkugelig ausgebildeten Lagerausnehmung 13 aufweist,
eine Zentrierkugel 11, die mit einer Bohrung 15 auf dem Lagerzapfen 6 axial verstellbar aufgenommen ist und die mit einer Zentrieraußenfläche 12 in der Lagerausnehmung 13 schwenkbar aufgenommen ist, wobei die Zentrieraußenfläche 12 auf einer umhüllenden gedachten Kugelfläche liegt.

Hierbei ist vorgesehen, dass sich ein ringförmiger Außenflächenabschnitt 49 an die Zentrieraußenfläche 12 axial anschließt, wobei die ringförmiger Außenflächenabschnitt 49 innerhalb der umhüllenden gedachten Kugelfläche 46 angeordnet ist.

## Beschreibung

Die Erfindung betrifft eine Zentrieranordnung an einem Doppelkreuzgelenk umfassend eine erste Außengabel mit zwei ersten Außengabelarmen, die durch eine erste Brücke miteinander verbunden sind, wobei die erste Brücke einen auf einer ersten Längsachse zentrierten Lagerzapfen trägt,
eine zweite Außengabel mit zwei zweiten Außengabelarmen, die durch eine zweite Brücke miteinander verbunden sind, wobei die zweite Brücke eine auf einer zweiten Längsachse zentrierten Kalotte mit einer zumindest teilweise hohlkugelig ausgebildeten Lagerausnehmung aufweist, und
eine Zentrierkugel, die mit einer Bohrung auf dem Lagerzapfen axial verstellbar aufgenommen ist und die mit einer Zentrieraußenfläche in der Lagerausnehmung schwenkbar aufgenommen ist, wobei die Zentrieraußenfläche auf einer umhüllenden gedachten Kugelfläche liegt.

Eine solche Zentriereinheit ist aus der DE 10 2005 053 362 A1 bekannt. Der Lagerzapfen ist hierbei im Übergang zur ersten Brücke im Durchmesser erweitert, wobei sich der Lagerzapfen in Richtung zur ersten Brücke zunächst konisch erweitert und dann in einen zylindrischen Abschnitt übergeht. Der zylindrische Abschnitt dient als Sitz für eine Abdichtung der Zentrieranordnung. Bei maximaler Abwinklung des Doppelkreuzgelenks stößt die Kalotte mit einem Außenrand gegen den im Durchmesser erweiterten konischen Abschnitt des Lagerzapfens.

Aufgabe der vorliegenden Erfindung ist es, den Beugewinkel eines Doppelkreuzgelenks zu erhöhen.

Die Aufgabe wird erfindungsgemäß durch die Merkmale des Anspruchs 1 gelöst. Es hat sich gezeigt, dass durch den ringförmigen Abschnitt, der gegenüber der die Zentrieraußenfläche einhüllenden gedachten Kugelfläche nach innen versetzt ist, auch bei großen Beugewinkeln und bei hohen Belastungen deutlich erhöht werden konnte. Dies ist unter anderem darauf zurück zu führen, dass scharfe Kanten vermieden werden, die in die Lagerausnehmung der Kalotte einschneiden könnten.

Hierbei ist der ringförmige Außenflächenabschnitt an einem der ersten Brücke zugewandten ersten axialen Ende der Zentrierkugel angeordnet.

Der ringförmige Außenflächenabschnitt kann kegelstumpfförmig oder konvex abgerundet gestaltet sein. Somit kann der ringförmige Außenflächenabschnitt in einfacher Art und Weise hergestellt werden. Der ringförmige Außenflächenabschnitt kann jedoch auch abgerundet gestaltet sein, so dass er sich bei zunehmender Belastung allmählich an die hohlkugelig ausgebildete Lagerausnehmung der Kalotte allmählich anschmiegt. In beiden Fällen ist der Übergang zwischen dem ringförmigen Außenflächenabschnitt und der Zentrieraußenfläche stetig, um eine Kante im Übergang zu vermeiden. Neben einer kegelstumpfförmigen oder abgerundeten Gestaltung sind auch andere Übergänge denkbar, bei denen gewährleistet ist, dass keine scharfen Kanten entstehen.

Dadurch, dass eine Umfangsnut im Lagerzapfen vorgesehen ist, in die die Kalotte bei maximal abgewinkeltem Doppelkreuzgelenk eintaucht, kann die Kalotte gegenüber dem Lagerzapfen weiter abgewinkelt werden, was zu einem größeren Beugewinkel des Doppelkreuzgelenks führt.

Vorzugsweise beträgt der maximale Beugewinkel zwischen der ersten Außengabel und der zweiten Außengabel mindestens 50 Grad.

In einer Ausgestaltung der Erfindung ist das Verhältnis der axialen Länge des Lagerzapfens relativ zum Außendurchmesser der Zentrierkugel größer als 0,9, vorzugsweise größer als 0,95.

Ein bevorzugtes Ausführungsbeispiel ist anhand der Zeichnungen näher erläutert.

Hierin zeigt
- Figur 1: einen Längsschnitt eines erfindungsgemäßen Doppelkreuzgelenks,
- Figur 2: einen Längsschnitt der Zentrierkugel des Doppelkreuzgelenks gemäß Figur 1,
- Figur 3: eine vergrößerte Darstellung der Einzelheit X aus Figur 2 und

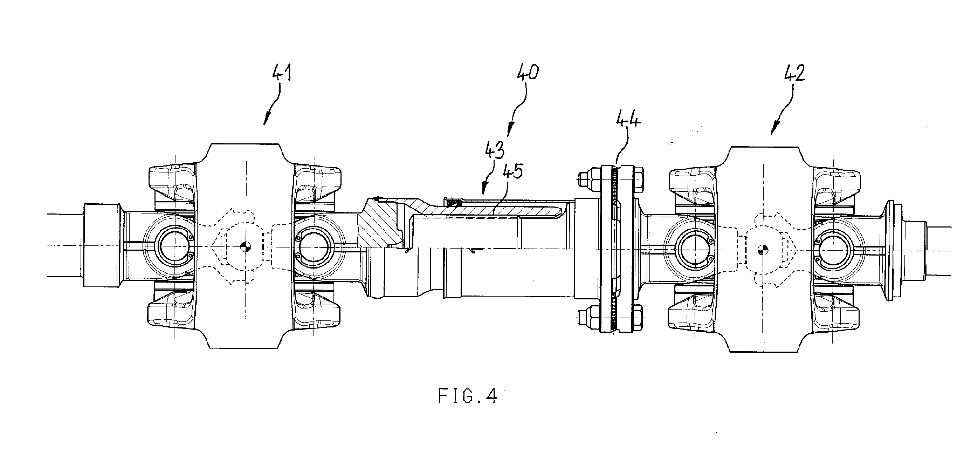

- Figur 4: einen Längsschnitt einer Gelenkwelle mit zwei erfindungsgemäßen Doppelkreuzgelenken.

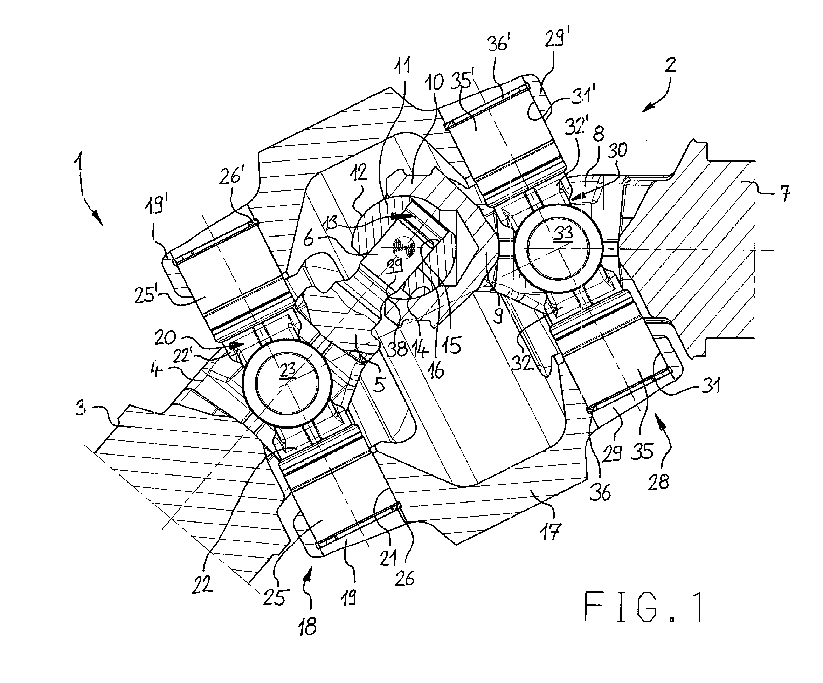

Die Figur 1 zeigt ein erfindungsgemäßes Doppelkreuzgelenk mit einem ersten Kreuzgelenk 1 und einem zweiten Kreuzgelenk 2. Das erste Kreuzgelenk 1 umfasst eine erste Außengabel 3, welche bezüglich einer ersten Längsachse L₁ zwei diametral zueinander angeordnete erste Auβengabelarme 4 aufweist. Die ersten Auβengabelarme 4 sind an ihren dem zweiten Kreuzgelenk 2 zugewandten Enden durch eine erste Brücke 5 miteinander verbunden. An der ersten Brücke 5 ist ein auf der ersten Längsachse L₁ zentrierter Lagerzapfen 6 vorgesehen.

Das zweite Kreuzgelenk 2 umfasst eine zweite Außengabel 7, die, bezogen auf eine zweite Längsachse L₂, diametral zueinander angeordnete zweite Außengabelarme 8 aufweist. Die zweiten Außengabelarme 8 sind an ihren dem ersten Kreuzgelenk 1 zugewandten Enden durch eine zweite Brücke 9 miteinander verbunden. Die zweite Brücke 9 trägt eine zum ersten Kreuzgelenk 1 hin gerichtete Kalotte 10. Die Kalotte 10 umfasst eine Lagerausnehmung 13, in der eine Zentrierkugel 11 sitzt. Die Zentrierkugel 11 weist eine teilweise sphärische Zentrieraußenfläche 12 auf, mit der diese drehbar in einer entsprechend der Zentrierkugel 11 angepassten Zentrierinnenfläche 14 der Kalotte 10 sitzt. Die Zentrierkugel 11 weist ferner eine auf der ersten Längsachse L₁ zentrierte Bohrung 15 auf, mit der die Zentrierkugel 11 entlang der ersten Längsachse L₁ verschiebbar auf einem zylindrischen Lagerabschnitt 16 des Lagerzapfens 6 aufgenommen ist.

Die erste Außengabel 3 und die zweite Außengabel 7 sind über eine Doppelgabel 17 miteinander verbunden. Die Doppelgabel 17 weist eine erste Innengabel 18 auf, die, bezogen auf eine dritte Längsachse L₃ der Doppelgabel 17, zwei diametral zueinander angeordnete erste Innengabelarme 19, 19' aufweist. Die erste Innengabel 18 ist über ein erstes Zapfenkreuz 20 mit der ersten Außengabel 3 gelenkig verbunden. In den ersten Innengabelarmen 19, 19' sind Lagerbohrungen 21, 21' vorgesehen, in denen jeweils eine Lagerbüchse 25, 25' einsitzt. Das erste Zapfenkreuz 20 weist vier jeweils paarweise zueinander zentriert angeordnete Zapfen 22, 22', 23 auf, wobei ein Paar der Zapfen 22, 22' in Lagerbüchsen 25, 25' der ersten Innengabel 18 über Nadellager drehbar angeordnet ist. Zur Sicherung der Lagerbüchsen 25, 25' sind Sicherungsringe 26, 26' angeordnet, gegenüber denen sich die Lagerbüchsen 25, 25' gegen die ersten Innengabelarme 19, 19' abstützen. Die anderen beiden Zapfen 23 sitzen in entsprechend gestalteten Lagerbüchsen, die in Lagerbohrungen der ersten Auβengabelarme 4 sitzen.

Ferner weist die Doppelgabel 17 an einer von der ersten Innengabel 18 abgewandten Seite eine zweite Innengabel 28 mit zur dritten Längsachse L₃ diametral angeordneten zweiten Innengabelarmen 29, 29' auf. Die zweite Innengabel 28 ist über ein zweites Zapfenkreuz 30 gelenkig mit der zweiten Außengabel 7 verbunden. Hierzu dient ein zweites Zapfenkreuz 30, welches vier jeweils paarweise zueinander zentriert angeordnete Zapfen 32, 32', 33 aufweist. Ein Paar der Zapfen 32, 32' ist drehbar in Lagerbohrungen 31, 31' der zweiten Innengabelarme 29, 29' aufgenommen. Hierzu sitzen Lagerbüchsen 35, 35' über Sicherungsringe 36, 36' axial gesichert in den Lagerbohrungen 31 ein. Die Zapfen 32, 32' sind in den Lagerbüchsen 35, 35' über Nadellager drehbar aufgenommen. Die anderen Zapfen 33 sitzen ebenfalls über Lagerbüchsen drehbar in Lagerbohrungen der zweiten Außengabelarme 8.

In der Figur 1 ist das Doppelkreuz maximal abgewinkelt dargestellt, wobei die Zentrierkugel 11 axial bezogen auf die erste Längsachse L₁ eine axiale Endstellung einnimmt, in der die Zentrierkugel 11 am weitesten von der ersten Brücke 5 entfernt ist. In dieser Stellung ist eine Umfangskante 39 der Kalotte 10 dem Lagerzapfen 6 radial angenähert, wobei ein Teil der Umfangskante 39 in eine Umfangsnut 38 des Lagerzapfens eintaucht. Der eintauchende Teil der Umfangskante 39 hintergreift sozusagen die Zentrierkugel 11 und taucht zwischen der ersten Brücke 5 und der Zentrierkugel 11 in die Umfangsnut 38 des Lagerzapfens 6 ein. In einer hier nicht dargestellten gestreckten Position des Doppelkreuzes, in der die erste Längsachse L₁ und die zweite Längsachse L₂ koaxial zueinander angeordnet sind, ist die Zentrierkugel 11 in einer der ersten Brücke 5 axial angenäherten Position angeordnet und überdeckt die Umfangsnut 38 zumindest teilweise.

Durch das Eintauchen der Umfangskante 39 der Kalotte 10 wird ein höherer Beugewinkel des Doppelkreuzgelenks erzielt. Um ein möglichst tiefes Eintauchen der Kalotte 10 in die Umfangsnut 38 zu ermöglichen, ist das Verhältnis des kleinsten Durchmessers der Umfangsnut 39 relativ zum Außendurchmesser des Lagerabschnitts 16 des Lagerzapfens 6 kleiner als 0,9. Ferner sollte der Durchmesser der sphärischen Zentrieraußenfläche 12 der Zentrierkugel 11 möglichst groß gegenüber dem Durchmesser des Lagerabschnitts 16 des Lagerzapfens 6 sein, um eine Berührung der Kalotte 10 mit dem Lagerzapfen 6 erst bei möglichst großen Beugewinkeln zu gewährleisten. Vorzugsweise beträgt daher das Verhältnis des Außendurchmessers der Zentrierkugel 11 relativ zum Außendurchmesser des Lagerabschnitts 16 des Lagerzapfens 6 mehr als den Wert 2,0, vorzugsweise mehr als 2,2.

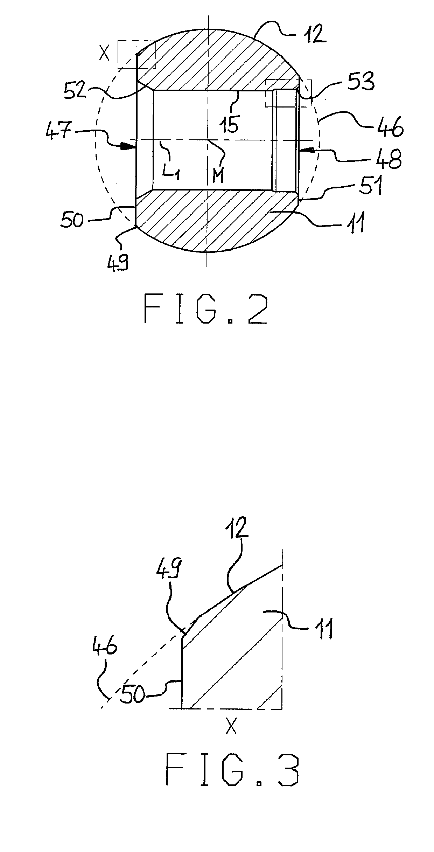

Die Figur 2 zeigt einen Längsschnitt der Zentrierkugel 11 des Doppelkreuzgelenks gemäß Figur 1. Figur 3 zeigt die Einzelheit X aus Figur 2 mit einer detaillierten Darstellung des ringförmigen Außenflächenabschnitts 49. Die Figuren 2 und 3 werden im folgenden zusammen beschrieben.

Die Zentrierkugel 11 weist, wie bereits oben erläutert, eine Zentrieraußenfläche 12 auf, die auf einer umhüllenden gedachten Kugelfläche 46 mit dem Mittelpunkt M liegt. Man erkennt, dass die Zentrierkugel 11 genau genommen in Form einer Kugelscheibe mit Bohrung 15 ausgebildet ist, welche an einem ersten axialen Längsende 47 eine erste Stirnfläche 50 aufweist und an einem zweiten axialen Längsende 48 eine zweite Stirnfläche 51. Die beiden Stirnflächen 50, 51 sind im rechten Winkel zur ersten Längsachse L₁ angeordnet. Ferner erkennt man, dass der Mittelpunkt M außermittig zur Kugelscheibe angeordnet ist und näher zur ersten Stirnfläche 50 angeordnet ist.

Am ersten axialen Längsende 47 schließt sich in axialer Richtung an die Zentrierau-βenfläche 12 ein ringförmiger Außenflächenabschnitt 49 an, der innerhalb der umhüllenden gedachten Kugelfläche 46 liegt. Der ringförmige Außenflächenabschnitt 49 verbindet die Zentrieraußenfläche 12 mit der ersten Stirnfläche 50. Im dargestellten Ausführungsbeispiel ist der ringförmige Außenflächenabschnitt 49 kegelstumpfförmig gebildet, wobei der Kegelstumpf einen Kegelwinkel von über 90° aufweist. Um eine Kante im Übergang von der Zentrieraußenfläche 12 und dem ringförmigen Außenflächenabschnitt 49 zu vermeiden, kann zwischen der Zentrieraußenfläche 12 und dem Außenflächenabschnitt 49 ein stetiger Übergang, z. B. im Längsschnitt betrachtet in Form eines Bogenabschnitts, vorgesehen sein. Grundsätzlich ist es jedoch auch denkbar, dass der Außenflächenabschnitt 49 abgerundet gestaltet ist und ebenfalls einen stetigen Übergang zur Zentrieraußenfläche 12 aufweist.

Die Bohrung 15, welche zur ersten Längsachse L₁ zentriert ist, geht am ersten axialen Ende 47 in einen kegelstumpfförmig gestalteten ersten ringförmigen Innenflächenabschnitt 52 über. An dem zweiten axialen Ende 48 weist die Bohrung 15 einen Bohrungsabschnitt mit gegenüber der übrigen Bohrung erweiterten Durchmesser auf. Der Bohrungsabschnitt mit erweitertem Durchmesser geht am zweiten axialen Ende 48 in einen zweiten ringförmigen Innenflächenabschnitt 53 über, der ebenfalls kegelstumpfförmig gestaltet ist und sich zur zweiten Stirnfläche 51 hin erweitert, wobei der zweite ringförmige Innenflächenabschnitt 53 den Bohrungsabschnitt mit erweitertem Durchmesser mit der zweiten Stirnfläche 51 verbindet.

Figur 5 stellt eine Gelenkwelle 40 in Längsansicht und im Längsschnitt dar. Die Gelenkwelle 40 umfasst zwei erfindungsgemäße und identisch aufgebaute Doppelkreuzgelenk 41, 42. Beide Doppelkreuzgelenk 41, 42 sind über eine Welle 43 miteinander verbunden. Die Welle 43 ist durch eine Flanschverbindung 44 teilbar, wobei der links dargestellte Wellenteil eine Längsverschiebeeinheit 45 zum Ausgleich der von den Beugewinkeln der Doppelkreuzgelenk 41, 42 abhängige Längenveränderungen zwischen den Doppelkreuzgelenk 41, 42. Die Gelenkwelle 40 dient als Seitenwelle zum Antrieb eines Rades eines Kraftfahrzeuges und ist hierzu zwischen dem Ausgang eines Getriebes und dem Rad angeordnet.

### Bezugszeichenliste

- 1: erstes Kreuzgelenk
- 2: zweites Kreuzgelenk
- 3: erste Auβengabel
- 4: erster Au βengabelarm
- 5: erste Brücke
- 6: Lagerzapfen
- 7: zweite Außengabel
- 8: zweiter Au βengabelarm
- 9: zweite Brücke
- 10: Kalotte
- 11: Zentrierkugel
- 12: Zentrierau βenfläche
- 13: Lagerausnehmung
- 14: Zentrierinnenfläche
- 15: Bohrung
- 16: Lagerabschnitt
- 17: Doppelgabel
- 18: erste Innengabel
- 19, 19': erster Innengabelarm
- 20: erstes Zapfenkreuz
- 21: Lagerbohrung
- 22: Zapfen
- 23: Zapfen
- 25: Lagerbüchse
- 26: Sicherungsring
- 28: zweite Innengabel
- 29, 29': zweiter Innengabelarm
- 30: zweites Zapfenkreuz
- 31: Lagerbohrung
- 32: Zapfen
- 33: Zapfen
- 35: Lagerbüchse
- 36: Sicherungsring
- 38: Umfangsnut
- 39: Umlaufkante
- 40: Gelenkwelle
- 41: Doppelkreuzgelenk
- 42: Doppelkreuzgelenk
- 43: Welle
- 44: Flanschverbindung
- 45: Längsverschiebeeinheit
- 46: umhüllende gedachte Kugelfläche
- 47: erstes axiales Ende
- 48: zweites axiales Ende
- 49: ringförmiger Außenflächenabschnitt
- 50: erste Stirnfläche
- 51: zweite Stirnfläche
- 52: erster ringförmiger Innenflächenabschnitt
- 53: zweiter ringförmiger Innenflächenabschnitt

- L₁: erste Längsachse
- L₂: zweite Längsachse
- L₃: dritte Längsachse
- M: Mittelpunkt

## Patentansprüche

1. Zentrieranordnung an einem Doppelkreuzgelenk umfassend eine erste Außengabel (3) mit zwei ersten Außengabelarmen (4), die durch eine erste Brücke (5) miteinander verbunden sind, wobei die erste Brücke (5) einen auf einer ersten Längsachse (L₁) zentrierten Lagerzapfen (6) trägt, eine zweite Außengabel (7) mit zwei zweiten Außengabelarmen (8), die durch eine zweite Brücke (9) miteinander verbunden sind, wobei die zweite Brücke (9) eine auf einer zweiten Längsachse (L₂) zentrierten Kalotte (10) mit einer zumindest teilweise hohlkugelig ausgebildeten Lagerausnehmung (13) aufweist, und
eine Zentrierkugel (11), die mit einer Bohrung (15) auf dem Lagerzapfen (6) axial verstellbar aufgenommen ist und die mit einer Zentrieraußenfläche (12) in der Lagerausnehmung (13) schwenkbar aufgenommen ist, wobei die Zentrieraußenfläche (12) auf einer umhüllenden gedachten Kugelfläche liegt,
**dadurch gekennzeichnet,**
**dass** sich ein ringförmiger Außenflächenabschnitt (49) an die Zentrieraußenfläche (12) axial anschließt, wobei der ringförmiger Außenflächenabschnitt (49) innerhalb der umhüllenden gedachten Kugelfläche (46) angeordnet ist.

2. Zentrieranordnung nach Anspruch 1,
**dadurch gekennzeichnet,**
**dass** der ringförmige Außenflächenabschnitt (49) an einem der ersten Brücke (5) zugewandten ersten axialen Ende (47) der Zentrierkugel (11) angeordnet ist.

3. Zentrieranordnung nach einem der vorangehenden Ansprüche,
**dadurch gekennzeichnet,**
**dass** der ringförmige Außenflächenabschnitt (49) kegelstumpfförmig oder konvex abgerundet gestaltet ist.

4. Zentrieranordnung nach einem der vorangehenden Ansprüche,
**dadurch gekennzeichnet,**
**dass** der ringförmige Außenflächenabschnitt (49) einen stetigen Übergang zur Zentrieraußenfläche (12) aufweist.

5. Zentrieranordnung nach einem der vorangehenden Ansprüche,
**dadurch gekennzeichnet,**
**dass** der Lagerzapfen (6) eine Umfangsnut (38) aufweist, in die die Kalotte (10) bei maximal abgewinkeltem Doppelkreuzgelenk eintaucht.

6. Zentrieranordnung nach einem der vorangehenden Ansprüche,
**dadurch gekennzeichnet,**
**dass** der maximale Beugewinkel zwischen der ersten Außengabel (3) und der zweiten Außengabel (7) mindestens 50 Grad beträgt.

7. Zentrieranordnung nach einem der vorangehenden Ansprüche,
**dadurch gekennzeichnet,**
**dass** das Verhältnis der axialen Länge des Lagerzapfens (6) zum Außendurchmesser der Zentrierkugel (11) größer als 0,90, vorzugsweise größer als 0,95 ist.
